# EUROPEAN PATENT SPECIFICATION

(11) **EP 3 716 824 B1**
(45) Date of publication and mention of the grant of the patent: **20.04.2022**
(21) Application number: 18829907.7
(22) Date of filing: 27.11.2018
(51) Int. Cl.: A47J 31/42

(54) **IMPROVED COFFEE BREWING APPARATUS COMPRISING AN EXTRACTION SLEEVE**
VERBESSERTE KAFFEEBRÜHVORRICHTUNG MIT EXTRAKTIONSHÜLSE
APPAREIL D'INFUSION DE CAFÉ AMÉLIORÉ COMPRENANT UN MANCHON D'EXTRACTION

(30) Priority: 27.11.2017 GB 201719682
(43) Date of publication of application: 07.10.2020
(73) Proprietor: CambDEV Limited, Cambridge, Cambridgeshire CB25 9QE (GB)
(72) Inventor: MALKIN, Hugh, Cambridge Cambridgeshire CB25 9QE (GB); GUTSELL, Graham Scott, Newbury Berkshire RG14 1QL (GB); BULLOCK, Timothy Charles, Poole Dorset BH13 7HT (GB); GEORGE, Ian Michael Riorden, Salisbury Wiltshire SP1 3NN (GB); HASTINGS, Nicholas James, Cambridge Cambridgeshire CB24 4SW (GB); WILLIAMSON, Finbarr Charles Ronald, London Greater London E9 7LH (GB); MOLONY, David Marcus, Cambridge Cambridgeshire CB1 8DS (GB)
(74) Representative: EIP
(86) International application number: PCT/GB2018/053421
(87) International publication number: WO 2019/102228

(56) References cited:
- WO-A1-2017/163086

## Description

### Field of the Invention

This invention relates to systems, apparatus and processes for producing and dispensing brewed coffee by roasting, grinding and extraction of coffee from a prepacked coffee cartridge.

### Background to the Invention

Coffee making apparatus for brewing coffee powder contained in a cartridge, comprising a brewing chamber adapted to receive a coffee powder cartridge, means for perforating the coffee powder cartridge, and a pump for feeding hot brewing water into the brewing chamber to extract the coffee are now ubiquitous.

These devices are used predominantly in homes, being designed for use by untrained operators. They offer a relatively quick and convenient method for producing higher quality coffee brews than can be obtained using instant coffee granules, whilst avoiding the need for costly roasting, grinding and brewing paraphernalia, the use of which requires considerable expertise. Indeed, the system commercialized under the trademark "Nespresso^{®}" has sold in the millions and is currently used in homes, restaurants and hotels throughout the world.

A variety of different cartridges (or capsules) for use with such apparatus have been described (see for example: US4895308; US5402707; WO93/17932; US5656316; WO2014/128658; WO2014/091439; US2005/0150391 and EP1554958). Such cartridges contain ground and roasted coffee powder which is automatically or semi-automatically extracted under pressure, providing convenience in operation as well as reproducible extraction conditions. They therefore permit any user to quickly and effortlessly prepare a cup of freshly extracted coffee.

For extracting the coffee powder contained in the cartridge, manually operated, semi-automatic as well as fully automatic devices have been described. Usually, in a manually operated coffee maker, the cartridge is inserted into a cartridge holder that in turn is inserted into the coffee making apparatus. In semi-automatic coffee makers, the cartridge is inserted into a cartridge retainer or directly into the brewing chamber of the machine, which is then closed manually (typically by means of a lever mechanism). In a fully automatic coffee maker, the cartridge is removed from a cartridge magazine and automatically inserted into the brewing chamber. In both automatic and semi-automatic apparatus, the used or spent cartridge is ejected from the brewing chamber and discarded into a waste container after brewing is complete without any operator intervention.

Common to all of the above-described coffee makers is the provision of one or more "brewing spikes" provided with one or more openings for injecting brewing water into the cartridge and also adapted to punch the bottom and/or the top of the cartridge. During operation, the brewing water is injected into the cartridge by means of the brewing spike, with the result that is flows under pressure through the coffee powder contained in the cartridge and escapes as brewed coffee from the cartridge through perforations created in the bottom.

However, the quality of the brewed coffee dispensed by the cartridge systems described above is limited by the fact that the coffee contained in the cartridges is in a pre-roasted, pre-ground and powdered form. This greatly compromises the organoleptic qualities of the resultant coffee extract, since many soluble and volatile aromatic components which contribute to the quality (and freshness) of brewed coffee are produced transiently during roasting and/or grinding and are rapidly lost during subsequent storage.

There is also a growing recognition of the adverse environmental impact of the spent coffee cartridges, which are typically manufactured of heat-resistant polymer/metal composites which cannot be economically recycled.

There is therefore a need for a convenient, cartridge-based coffee making system which provides superior coffee beverages by permitting the user to grind (and optionally roast) the coffee prior to brewing, as well as for cartridge-based coffee making systems which use more environmentally friendly consumables.

Such systems are described in WO/2017/163086, which describes cartridge-based coffee making systems in which grinding and extraction take place within an *extraction sleeve.* The extraction sleeve is a hollow tube member within which a grinding head is located and within which it reciprocates and/or rotates. The extraction sleeve can withstand the forces associated with grinding and extraction, and can be rigid, for example formed of hard, heat-resistant materials (such as stainless steel).

The use of an extraction sleeve permits great flexibility in the materials used to form the cartridge, since it can configured to act in conjunction with the cartridge to isolate the beans during the grinding and extraction steps, thereby permitting the use of compostable/biodegradable materials and avoiding the need for pressure jackets and/or non-recyclable metals/hard plastic composites.

The extraction sleeve systems described in WO/2017/163086 are ideally suited to blade grinding, in which coffee beans are fragmented by a cutting and/or shearing process (rather than by crushing and/or grinding, as in burr grinding). However, the present inventors have now recognized that blade grinding imparts centrifugal forces to the coffee bean fragments which can result in an uneven distribution of coffee grounds within the extraction sleeve after grinding is complete. For example, depending *inter alia* on the geometry of the blades and the speed and duration of rotation, coffee grounds may accumulate on or near the inner walls of the extraction sleeve. This has implications for the optimal extraction of the coffee grounds.

### Summary of the Invention

In a first aspect there is provided a system for roasting, grinding, brewing and dispensing coffee comprising:
(a) a coffee cartridge containing: (i) unground and (ii) unroasted or part-roasted coffee beans, said cartridge having walls defining a cartridge chamber in which the beans are confined, wherein part or all of at least one wall of the cartridge is openable, and the openable wall of the cartridge is opposed to a slidable wall thereof, said slidable wall comprising:
   i. inner and outer surfaces, the inner surface being in contact with the beans;
   ii. a peripheral sealing portion on the inner surface; and
   iii. a central portion bounded by the peripheral sealing portion and comprising a screen for retaining the beans within the cartridge chamber while permitting a flow of coffee brew therethrough;
wherein said cartridge is secured in a cartridge holder of:
(b) coffee-making apparatus comprising:
i. a collector head adapted to contact and support the outer surface of the slidable wall of the cartridge and to collect coffee brew flowing therethrough;
ii. means for bringing the collector head into contact with the outer surface of the slidable wall and for sliding said slidable wall towards the openable wall of the cartridge, thereby opening the wall to produce an opened wall and exposed beans;
iii. means for roasting the exposed beans;
iv. an extraction sleeve having inner and outer surfaces and a sealing rim, the extraction sleeve being adapted to enter the cartridge chamber *via* the opened wall such that the sealing rim forms a face pressure seal with the peripheral sealing portion of the slidable wall of the cartridge, which seal isolates the exposed beans from the rest of the cartridge and contains them within an extraction chamber formed by the inner surface of the extraction sleeve and the central portion of the slidable wall;
v. a blade grinder adapted to rotate within the extraction sleeve, thereby levitating the beans off the inner surface of the slidable wall and fragmenting them to form coffee grounds within the extraction chamber;
vi. bedding means for distributing the coffee grounds such that they are disposed substantially evenly on the inner surface of the slidable wall of the cartridge thereby forming an extraction bed within the extraction chamber;
vii. a source of hot water, optionally pressurized hot water;
viii. an infuser head in fluid communication with the source of hot water and comprising infuser means comprising one or more outlets for the hot water, the infuser head being adapted to deliver hot water to the extraction bed within the extraction chamber, whereby coffee is extracted to yield a coffee brew; and
ix. means for delivering said coffee brew to a drinking vessel for consumption.

The use of bedding means for distributing the coffee grounds such that they are disposed substantially evenly on the inner surface of the slidable wall of the cartridge facilitates the formation of an extraction bed within the extraction chamber.

Other aspects and preferred embodiments and features of the invention are as defined in appended claims.

### Detailed description

### Definitions and general preferences

The coffee beans used according to the invention are seeds of plants of the genus Coffea. The beans may be of any variety, but are preferably from the species C. *robusta ("robusta"* coffee beans) or C. *Arabica ("arabica"* coffee beans).

Preferably the coffee beans are derived from C. *arabica* (for example, being South American or East African arabicas).

The coffee beans used according to the invention may also comprise blends containing mixtures of coffee bean-derived material derived from both C. *robusta* and C. *arabica* (for example, South American, East African or blends thereof). In preferred embodiments, the coffee beans are blend of arabica and robusta which are predominantly arabica with minor quantities of robusta.

The term *coffee cartridge* (sometimes abbreviated herein to *cartridge,* where context permits) is a term of art defining a single-use container comprising a chamber containing coffee which is adapted to be inserted into an automatic or semi-automatic coffee dispensing apparatus whereat hot water is introduced into the chamber and the coffee extracted and dispensed, after which the cartridge is discarded. Coffee cartridges are sometimes referred to as "coffee capsules" in the art.

Coffee cartridges can both reduce the time needed to brew coffee and simplify the brewing process by eliminating the need to measure out portions from large bulk containers, while permitting the user to select from a wide range of different coffee types. They can also help to keep the unused product fresher by individually packaging portions separately without exposing the entire supply batch to light and air.

A *single-serve coffee cartridge* is a term of art for a coffee cartridge containing a single portion of coffee in the chamber, i.e. containing a quantity of coffee sufficient for a single beverage.

As used herein, the term *roasted* as applied to coffee beans defines material that has been roasted to some degree. The term *roasting* is to be interpreted accordingly.

The term *fluidized bed roasting* in the context of coffee beans is a term of art defining a roasting process whereby coffee beans are at least partially levitated by a stream of heated air in which the degree of roasting is controlled by variation of the temperature of the air and the duration of heating.

Fluidized bed roasting may be applied according to the invention to unground coffee beans (as defined herein), and in particular to whole beans as well as beans which have been cracked or fragmented to a limited degree. Its use in relation to cracked beans may permit lower air velocities, smaller air ducts and/or reduced roasting temperatures and/or times.

Fluidized bed roasting may also be advantageously applied to dried and/or pre-heated coffee beans (as herein defined), since its use in relation to such materials may permit lower air velocities, smaller air ducts and/or reduced roasting temperatures and/or times.

The term *fast fluidized bed roasting* as used herein defined fluidized bed roasting (as defined above) in which the temperature of the heated air exceeds 250°C (for example, about 300°C) , so permitting roasting to proceed at an accelerated rate. Fast fluidized bed roasting may also be advantageously applied to dried and/or pre-heated coffee beans (as herein defined), since its use in relation to such materials may permit lower air velocities, smaller air ducts and/or reduced roasting temperatures and/or times.

The degree of roasting depends *inter alia* on factors such as temperature and duration of roasting, but may be characterized by the colour change of the coffee beans as a result of the roasting process.

This colour change can be measured using an Agtron^{®} spectrophotometer and expressed as values on a scale as follows:

| **Roast** | **Agtron value** | **Characteristics** |
|---|---|---|
| Light | >70 | Light brown to cinnamon colour. Light body, muted aroma, tea-like flavour. No oil on surface of bean. |
| Medium-light | 61-70 | Moderately light brown colour. Bright, sweet acidity. Surface of bean remains dry |
| Medium | 51-60 | Medium brown color. Balanced acidity, fuller body. Generally dry bean surface |
| Medium-dark | 41-50 | Rich brown color. Droplets of oil appear on bean surface. Muted acidity, sometimes heavier body. |
| Dark | 35-40 | Deep brownish/black color. Spots of oil to shiny surface Bittersweet, scorched-wood roast notes. Acidity muted. |
| Very dark | 25-34 | Black surface covered brightly with oil. Bitter/bittersweet tones dominate. Body thin. |
| Extremely dark | < 25 | Black, shiny surface. Burned bitter tones. |

Thus, the terms *light, medium-light, medium, medium-dark, dark, very dark* and *extremely dark* are applied herein in relation to the roasted coffee bean material for use according to the invention in accordance with the above scale.

As explained above, whilst the degree of roasting depends in part on the duration of roasting, in general it will be appreciated that temperatures of 196°C - 200°C yield a light roast, about 205°C a medium-light roast, about 210°C a medium ("American") roast, about 219°C a medium-dark ("City") roast, about 225°C a dark ("Full City") roast, 230°C to 240°C very dark ("Vienna" or "French") roasts and about 245°C an extremely dark ("Italian") roast.

Roasting therefore typically involves a process of heating coffee beans to a point beyond the *first crack.* The *first crack* is a term of art which describes a stage of roasting at which the beans first emit a cracking sound as the temperature nears 200°C (usually about 196°C). Since the roasting of pre-ground or cracked beans may not be characterized by a "first crack", the term "roasting" as used herein may also define a process whereby cracked or ground coffee beans are heated to temperature of 196°C or higher, or subjected to heating such that an Agtron value of >70 is achieved.

As used herein, the term "unroasted coffee beans" defines coffee beans that are unroasted (as defined above), but which may have been subject to certain heat treatments to yield the dried or pre-heated beans defined below. The term therefore includes "green" coffee beans.

In this context, the term "green" is a term of art defining beans which are unroasted but which have been dried to reduce the water content below that of beans fresh from demucilaging (which have a moisture content of 45 to 55% by weight). Thus, the term includes green coffee beans which have been dried (e.g. by sun drying or artificial oven heating) to a water content of 10%-14% by weight, and usually about 12% by weight.

However, it should be noted that the term "unroasted coffee bean" encompasses not only green coffee beans (as described above), but also a class of beans which includes "dried" and "pre-heated" coffee beans.

In this regard, the term "dried coffee bean" defines an unroasted bean which, while being unroasted (as defined above), has been dried to a moisture content of less than 10% (for example within the range of 0.5% to 9.0% or 1.0 to 5.0% by weight). Such dried beans are relatively brittle and shrunken relative to green coffee beans, and are therefore easier to grind in the unroasted state. They may also exhibit favourable roasting and extraction properties.

Furthermore, it should be noted that the term "unroasted coffee bean" encompasses not only green and dried coffee beans (as explained above), but also "pre-heated" coffee beans.

In this regard, the term "pre-heated coffee bean" defines an unroasted bean which, while being unroasted (as defined above), has nevertheless been heated to a point beyond being merely *dried* (as defined above), but which has not yet been *lightly roasted* (as also defined above). This is typically achieved by heating to a point before the first crack. Pre-heating green or dried coffee beans before grinding greatly facilitates subsequent heating and grinding operations and so may be useful in some embodiments of the invention.

As used herein, the term "part-roasted coffee bean" defines a bean which has been heated to a point beyond being merely dried or pre-heated (as defined above), such some (but not all) of the beans (or some but not all of any individual bean) has been at least lightly roasted. Thus, part-roasted coffee beans include beans which have been heated to a point at which some (but not all) have passed beyond the first crack. Such beans may be useful in embodiments where particularly rapid roasting is required and/or the roasting temperatures employed are relatively low and/or of short duration. Part-roasted coffee beans also include beans which comprise a mixture (i.e. a blend) of unroasted and roasted coffee beans.

As used herein, the term "whole coffee bean" is used herein to define whole coffee beans which have not been cracked, broken up into fragments or ground. The terms unroasted, dried unroasted, roasted and pre-heated as defined above and used in relation to whole coffee beans are to be interpreted to mean that the various operations are performed on whole coffee beans as starting material, irrespective of the effects of such operations on the physical characteristics of the beans.

The term "cracked coffee bean" is used herein to define unground coffee beans which have been fragmented and/or cracked to some degree, but are not ground (i.e. have not been subject to course (or finer) grinding, as herein defined). Such beans have an average diameter of at least 2 mm, for example at least 3mm, at least 4mm, at least 5mm or about 6mm. Again, the terms unroasted, dried unroasted, roasted and pre-heated as defined above and used in relation to cracked coffee beans are to be interpreted to mean that the various operations are performed on cracked coffee beans as starting material, irrespective of the effects of such operations on the physical characteristics of the beans.

The terms "ground coffee bean" and "coffee grounds" are used herein to define coffee beans which are in a fragmented form, for example having an average particle diameter of about 1.5mm ("course ground"), about 1.0mm (regular ground), about 0.75mm (drip ground), about 0.4mm (fine ground) or about 0.2mm (espresso ground). Since coffee beans are typically ground after roasting, ground beans are typically also roasted to some degree. However, ground unroasted, ground dried and ground pre-heated coffee beans are also contemplated for use according to the invention.

Thus, as used herein, the term "unground coffee bean" defines a class of coffee bean which includes whole coffee beans (as define above) and cracked coffee beans (as defined above). Thus, references herein to unground coffee beans include whole beans as well as beans which have been cracked or fragmented to a limited degree (e.g. such that they have an average diameter of at least 2 mm, for example at least 3mm, at least 4mm, at least 5mm or about 6mm), but which have not been ground to an average particle diameter of less than about 1.5mm.

As used herein, the term "extraction sleeve" defines a hollow tube member within which the grinder and infuser head may operate. The extraction sleeve is preferably adapted to withstand the forces associated with grinding and extraction, and so may be rigid, for example being formed of hard, heat-resistant materials (such as stainless steel). It is adapted to enter the cartridge *via* the openable wall and directly contact the peripheral sealing portion on the inner surface of the slidable wall of the cartridge, whereat it acts in conjunction with the slidable wall to form an extraction chamber which isolates the beans from the rest of the cartridge during grinding and extraction. Thus, the grinder, infuser head and extraction sleeve may form a unitary assembly.

### Grinding

Coffee is typically ground by burr grinding or blade grinding. The term "blade grinding" is a term of art defining a process by which coffee beans are fragmented by a cutting and/or shearing process (rather than by crushing and/or grinding, as in *burr grinding).*

As explained above, the ground coffee beans of the invention are in a fragmented form, for example having an average particle diameter of about 1.5mm ("course ground"), about 1.0mm ("regular ground"), about 0.75mm ("drip ground"), about 0.4mm ("fine ground") or about 0.2mm ("espresso ground"). Thus, the term "blade grinding" (and related terms such as "blade grinder") as used herein is to be interpreted broadly, to cover any form of processing which results in fragmentation by cutting or shearing of the coffee bean (for example to the particle sized listed above).

Grinding is typically executed after roasting. However, in some embodiments, a pre-grinding step is carried out in order to facilitate a later roasting step (by increasing the surface area of the coffee material exposed to heat). In such embodiments, the coffee beans are preferably dried or pre-heated (particularly when the coffee beans in the cartridge are green coffee beans, which have a relatively high water content and which are liable to form undesirable pastes when subject to grinding).

The grinder of the systems and apparatus of the invention is a blade grinder. It will be appreciated that the nature of the blade grinder will depend on the physical condition of the unground coffee beans contained in the cartridge (and in particular, whether they are: (a) whole or cracked; and (b) unroasted, dried, pre-heated or roasted).

It will also be appreciated that whole coffee beans may require harder and/or sharper blades than cracked beans, while roasted or dried beans are relatively friable and so may be effectively ground by relatively blunt and/or slow-moving blades. In contrast, green coffee beans (which have a relatively high water content and are difficult to grind while avoiding the formation of a paste) are typically (though not necessarily) pre-heated or roasted prior to grinding.

### Extraction

The term "extraction" in this context defines a process whereby hot water is brought into contact with coffee grounds thereby dissolving certain components of the coffee to form a coffee brew. This process is sometimes referred to in the art as brewing or percolation.

The temperature of the water, the pressure at which it is introduced into the chamber and the flow rate through the chamber all affect the quality of the coffee brew. However, those skilled in the art will be able to readily select appropriate values for these parameters by reference *inter alia* to the teachings of US4895308, US5402707, WO93/17932, US5656316, WO2014/128658, WO2014/091439, US2005/0150391 and EP1554958, all of which describe extraction of coffee contained in coffee cartridges.

The temperature of the hot water is typically between 91 and 94°C (though this will depend on whether the extraction chamber is under vacuum, when lower temperatures may be effective).

The water pressure selected affects the flow rate of the water through the coffee grounds, but many other factors also contribute including *inter alia* the particle size distribution of the coffee grounds, their density, the strength of brew required and the desired extraction yield.

Typically, the target extraction yield will be 18% to 22%. Such yields are obtainable at pressures of between 1 bar and 20 bar, yielding a mean flow rate of from 80 to 250 ml/min, for example from 120 to 200 ml/min.

The flow rate can be controlled, e.g. by varying the pressure of the hot water, to control the coffee intensity and avoid coffee under-extraction (associated with loss of flavour) or overextraction (associated with bitterness).

The target total dissolved solids (TDS) in the dispensed brew will depend on the style of brew required, but will usually be between 1% (Americano style "long" coffees) and 20% ("short" coffees, such as espresso). This can be readily controlled by *inter alia* varying the total volume of hot water passed through the cartridge chamber and the dose of coffee in the chamber.

### Bedding and/or tamping

Optimum extraction of the coffee grounds requires that all of the roasted coffee particles are contacted with hot water. Thus, the coffee grounds are typically formed into a continuous layer or *extraction bed* which can be evenly permeated by the hot water to extract the coffee. This process may be facilitated by *tamping* the coffee grounds to form a compacted extraction bed (sometimes referred to as a "pellet" or "puck") through which the hot water penetrates evenly.

### Extraction sleeve

The apparatus of the invention is advantageously adapted to deliver pressurized hot water to trapped and isolated beans within the extraction chamber formed by the extraction sleeve. The face pressure seal formed between the sealing rim of the extraction sleeve and the peripheral sealing portion of the slidable wall of the cartridge is sufficient to confine the coffee beans and/or coffee grounds and the hot water used for extraction. In such embodiments, the extraction sleeve may serve as a pressure jacket ensuring that the hot water pumped into the chamber passes through the grounds and bottom wall of the cartridge chamber without substantially leaking onto the other components of the cartridge.

Thus, the extraction sleeve is preferably adapted to serve as a pressure jacket to contain the pressurized hot water during injection into the chamber of the cartridge and through the coffee grounds

### Sealing fence

The reliability of the face pressure seal formed between the sealing rim of the extraction sleeve and the peripheral sealing portion of the inner surface of the slidable wall of the cartridge depends in part on the absence of beans (and/or other bean-derived debris) on the peripheral sealing portion of the slidable wall immediately prior to contact with the extraction sleeve, since the presence of such materials would prevent complete sealing contact between these elements under operating pressures.

In preferred embodiments, this is achieved by excluding the beans from the inner surface of the peripheral sealing portion of the slidable wall of the cartridge by a fence disposed on the inner surface of the slidable wall.

The fence can take any form, provided that it facilitates the formation of the face pressure seal between the sealing rim of the extraction sleeve and the peripheral sealing portion of the slidable wall of the cartridge by maintaining a bean-free peripheral sealing portion on the inner surface of the slidable wall of the cartridge.

In some embodiments, the fence is a displaceable fence, adapted to be displaced radially by the extraction sleeve when forming the face pressure seal with the peripheral sealing portion of the slidable wall of the cartridge. In such cases, the displaceable fence is adapted such that entry of the extraction sleeve into the cartridge chamber brings the outer surface of the extraction sleeve into contact with the inner surface of the fence and exerts an outward radial force thereon, thereby displacing it to a location outside of the extraction chamber after formation of said pressure seal.

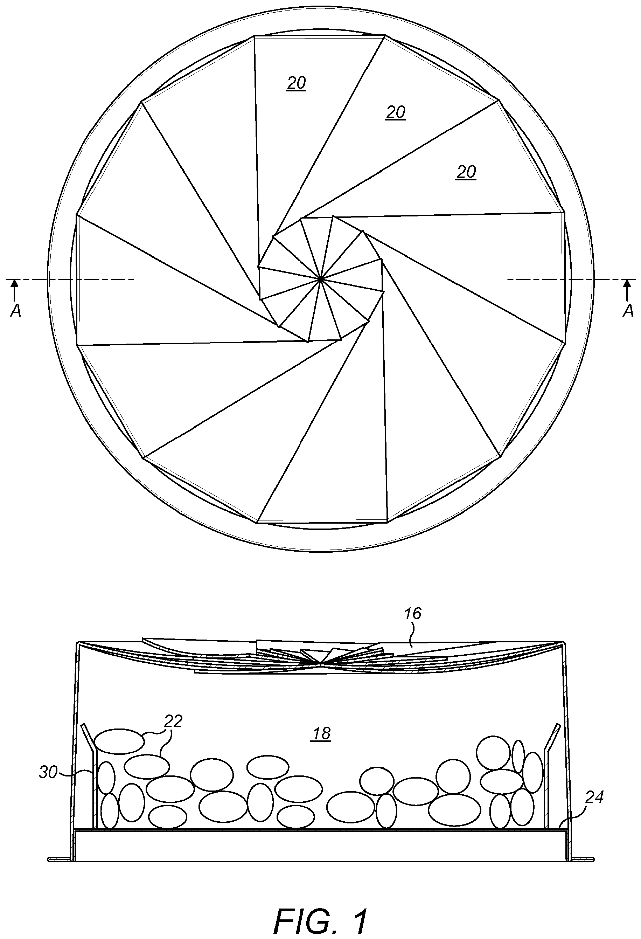

The displaceable fence may take the form of a circular band having a substantially frustoconical upper portion, the lower edge being in contact with the peripheral portion of the inner surface of the slidable wall and the upper edge having a diameter greater than that of the lower edge (as shown in Figure 1).

In certain embodiments, the displaceable fence is a flexible wall. In other embodiments, the fence is a rupturable wall. In the latter case, rupture may be facilitated by the provision of a perforated tear-line; and/or a rupturable welded or adhesive connection; and/or a rupturable crimped connection. Rupture may be promoted and/or initiated by weaknesses introduced by perforations or notches in the wall.

The wall may comprise an upper substantially frustoconical portion, which may comprise a plurality of splayed tabs. This facilitates proper alignment of extraction sleeve and wall *via* the "self-centering" action of the outward radial force exerted during contact with the inner surface of the frustoconical portion during entry of the extraction sleeve into the cartridge chamber.

The fence may be formed of any suitable material, but preferred are one or more materials selected from: paper, cardboard, coated paper or cardboard, and metal-, polytetrafluoroethylene- (PTFE-) or nitrocellulose-coated paper or cardboard. Preferably, the fence is biodegradeable, compostable and/or recyclable.

### Roasting

As explained above, roasting may be achieved by heating the coffee to temperatures of at least 196°C - 200°C. Lower temperatures may be employed in circumstances where the beans are dried, pre-heated or part-roasted.

Preferably, the duration of roasting is below 5 minutes, and preferably below 3 minutes, more preferably below 2 minutes, and most preferably below 1 minute.

Any means of heating may be employed, including microwave heating, radiant heating, conductive heating, convection heating (e.g. by a flow of hot air) or any combination thereof.

The heating means (and heating parameters, including duration and temperature) will also be selected according to the bean to be roasted. For example, whole coffee beans may require exposure to higher temperatures and/or longer heating cycles, whereas cracked coffee beans may require lower temperatures and/or heating durations (since they typically offer a greater surface area to the heat source).

The roasting process may include a preliminary heating stage in which moisture is driven out of the beans. In embodiments where green coffee beans are employed, this moisture content can be as much as 12% by weight. The bean cannot actually be roasted until the moisture is removed: until it is removed, prolonged exposure to heat results in "cooking" rather than "roasting" of the bean. Cooking results in the formation of acids (such as acetic acid), and various off-flavours. Thus, in some embodiments, dried or pre-heated beans (as defined herein) are used.

The roasting process may also include a pre-grinding or crushing step, for example to increase the surface area of the beans exposed to heat (and so accelerate roasting).

Roasting may be conveniently achieved by oven roasting or fluidized bed roasting, as described in more detail below. In either case, the roasting may be preceded by an initial microwave heating step (e.g. to dry or pre-heat the beans and/or drive off moisture).

Roasting may be accompanied or followed by a degassing/venting step, since roasting is associated with the release of hot gases (mainly carbon dioxide) from the coffee material.

### Oven roasting

The beans may be roasted by radiant heat, for example in a drum heated in an oven. Such embodiments employ remote roasting configurations (described in more detail herein). However, care must be taken not to scorch and so ruin the beans, and smoke and oils generated in the process remain in contact with the beans and can confer a disagreeable taste.

### Fluidized bed roasting

In certain embodiments of the invention, the coffee is subjected to fluidized bed roasting (as herein defined). Fluidized bed roasting (for example as described in US5394623) avoids the problems associated with smoke and oils generated during oven roasting.

However, care must be taken to avoid scorching the beans. Thus, in embodiments where fluidized bed roasting is employed according to the invention, provision for quenching the beans after roasting is completed may be provided. This may be achieved by the introduction of a stream of ambient air or by spraying with water. Such techniques are described, for example, in US4484064, US5185171, US3964175 and US5394623.

Fluidized bed roasting may be readily implemented in remote roasting systems (as described above), since: (a) the stream of hot air may be used to drive the coffee material from the chamber of the cartridge and transport it to a separate roasting chamber (so obviating the need for a mechanical transfer ram, shuttle hopper or caddy); and (b) the use of a separate roasting chamber permits the use of larger airflow ducts (and hence higher volumetric flow rates) than could be achieved when using the cartridge itself as a roasting chamber.

However, fluidized bed roasting may also be implemented *in situ.* For example, the cartridge comprises an openable wall, the beans may be exposed to sufficiently high volumetric flow rates into and out of the cartridge to fluidize the beans *in situ* without the need for additional ducting in the cartridge.

Fluidized bed roasting may be applied according to the invention to unground coffee beans (as defined herein), and in particular to whole beans as well as beans which have been cracked or fragmented to a limited degree. Its use in relation to cracked beans may permit lower air velocities, smaller air ducts and/or reduced roasting temperatures and/or times.

Fluidized bed roasting may also be advantageously applied to dried and/or pre-heated coffee beans (as herein defined), since its use in relation to such materials may permit lower air velocities, smaller air ducts and/or reduced roasting temperatures and/or times.

Fast fluidized bed roasting (as used herein defined) may be advantageously used in circumstances where accelerated roasting is required. Fast fluidized bed roasting may be applied to dried and/or pre-heated coffee beans (as herein defined), since its use in relation to such materials may permit lower air velocities, smaller air ducts and/or reduced roasting temperatures and/or times.

Fluidized bed roasting may also be employed to remove chaff expelled from the bean as it expands during roasting, so reducing contamination from smoke and oils generated in the roasting process. This may conveniently be achieved by filtering the hot air to remove chaff produced during roasting.

### Additives

The coffee cartridge of the invention contains unground coffee beans, but in some embodiments the cartridge may also contain additives confined in the cartridge chamber together with the coffee beans. In such embodiments, the cartridge is adapted to serve as an extraction chamber for the additives as well as the coffee beans.

These optional additives may be selected from flavouring agents, preservatives, foaming agents (as described in e.g. WO2013034520), anti-foaming agents (e.g. surfactants), foam stabilizers (e.g. as described in US2010310746), colouring agents and mixtures thereof.

Suitable flavouring agents include those selected from: cocoa, caramel, vanilla, tea, chicory, fruit/berry extracts (e.g. raspberry, cherry, apricot, banana or citrus, such as lemon), herbs (for example mint), spices (for example, chilli and cinnamon, nutmeg), liqueurs (for example brandy and Amaretto), spirits (e.g. rum and brandy), salt, sugar, scorched sugar, honey, nuts (e.g. almond, hazelnut, walnut, peanut, pecan, macadamia and pistachio), coconut and mixtures of the foregoing.

The additives may be in powdered or granular form (for example, having been spray-dried). In some cases (such as fruit/berry extracts, honey and liqueurs) they may be provided as a syrup or as a glaze or coating on the coffee beans and/or the walls of the cartridge chamber.

Particularly preferred according to the invention is a cartridge containing unground coffee beans and cocoa (optionally further comprising one or more of the other additives listed above), said cartridge having walls defining a chamber in which the beans and cocoa are confined, the cartridge being adapted to serve as a grinding chamber for the coffee beans and as an extraction chamber for the coffee beans and additive(s). In such embodiments, the cocoa is preferably in powdered form.

### Cartridge capacity

The internal volume of the cartridge chamber is a function of the amount of coffee present and of the volume of water to be introduced into the chamber for extraction. The volume of water will vary according to the style of coffee to be brewed (e.g. long or short), but is typically 0.5 to 3 times the volume of the coffee.

### Cartridge materials

It will be appreciated that any single cartridge may be constructed from a variety of different materials, and may for example employ different materials for the slidable and reversibly openable walls.

The cartridge may be constructed from materials that are heat resistant to at least 80°C, and preferably to at least 100°C. Those skilled in the art will be able to select an appropriate material from a wide variety of suitable materials described in, for example, US4895308, US5402707, WO93/17932, US5656316, WO2014/128658, WO2014/091439, US2005/0150391 and EP1554958.

Other suitable materials include: metals (such as aluminium, usually having a thickness of between 20µm and 100µm); plastics (such as polypropylene, polyethylene terephthalate (PET) and metallized PET); metal-plastic composites (such as plastic-coated aluminium); cardboard, polymer-coated cardboard and cardboard-metal or cardboard-plastic composites.

Suitable composite/laminate materials include those provided with an oxygen barrier layer (such as ethylene vinyl alcohol, polyvinylidene chloride and/or SiO₂), including barrier-layer coated cardboard/aluminium/plastic or cardboard/plastic laminates.

In certain embodiments, the cartridge cap or plugs are formed of polypropylene (PP), while the walls are formed of polyethylene terephthalate (PET). In such embodiments, the cap is advantageously injection moulded, while the cartridge itself is blow-moulded.

In preferred embodiments, the cartridge (or parts thereof, for example the slidable wall) may comprise polylactic acid (PLA), or other bioplastics, for example in the form of a PLA or bioplastic coating on the inner surface of the cartridge chamber or slidable wall.

### Screen

The slidable wall of the cartridge comprises a screen for retaining the beans within the cartridge chamber while permitting a flow of coffee brew therethrough.

The screen may take any form, but in preferred embodiments it comprises a filter for retaining coffee grounds and other particulates released during extraction within the cartridge chamber, and may comprise a layer of filter paper or woven or non-woven fibres based on cellulose, PET or PP. Such filters may conveniently be bonded or welded to the chamber-proximal surface of the bottom wall of the chamber.

The screen may comprise coffee filter paper, a wide variety of which are readily available. Those skilled in the art will be able to select an appropriate filter by reference *inter alia* to the type of coffee being extracted.

### Biodegradeability

The cartridge according to the invention may be advantageously manufactured from a compostable/biodegradable material. Such materials are described in detail in WO2014/128658, and in particular at pages 4-6 thereof (the content of which is incorporated herein by reference).

Such cartridges preferably meet European standard EN 13432.

### Cleaning

As explained above, the systems of the invention do not require brewing spikes. This facilitates cleaning of the apparatus after brew extraction, since brewing spikes are relatively difficult to clean. In preferred embodiments, the grinder of the invention is a blade grinder, and in such embodiments the blade can be rotated at speeds sufficient to agitate and drive heated water in a turbulent flow over the blades, extraction sleeve surfaces, collector and infuser heads, so permitting rapid and efficient cleaning.

### Exemplification

Embodiments of the present invention will now be described by way of example with reference to the accompanying drawings in which:
Figure 1 shows plan and section views of a coffee cartridge for use in the system of the invention in closed configuration.
Figure 2 shows top and bottom perspective views of the coffee cartridge shown in Figure 1.
Figure 3 illustrates schematically a process for roasting, grinding, brewing and dispensing coffee using the coffee cartridge shown in Figures 1 and 2 in a coffee making apparatus adapted for use therewith.

It will be appreciated that part-roasted beans may be used in place of the unroasted (green) coffee beans referenced in the Example described below when practising the invention.

### Example 1

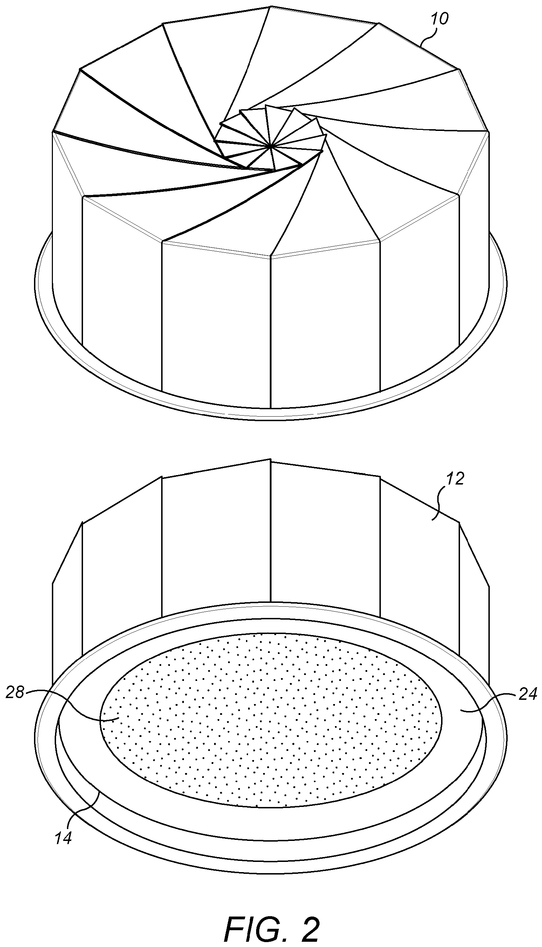

Referring now to Figures 1 and 2, the coffee cartridge (10) is substantially cylindrical with substantially cylindrical side walls (12), a bottom slidable wall (14) slidable against the side walls (12) and an openable top wall (16). The walls define a cartridge chamber (18) containing unground (whole) and unroasted (green) coffee beans (22). Part-roasted beans may also be used. The cartridge is formed of cardboard.

As shown in Figure 1, an annular fence (30) seated on the inner surface of the slidable wall (14) prevents contact of the beans (22) with the peripheral sealing portion (24) of the inner surface of the slidable wall.

As shown in Figure 2, the slidable wall (14) comprises a peripheral sealing portion (24) bounding a central portion comprising a coffee filter paper screen (shown stippled, 28).

The openable top wall (16) is formed by a number of sequentially overlapping hinged flaps (20).

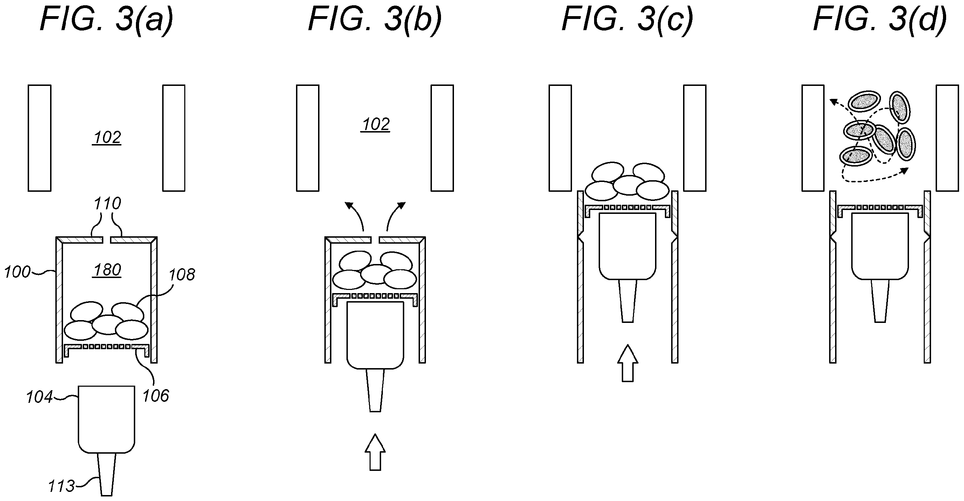

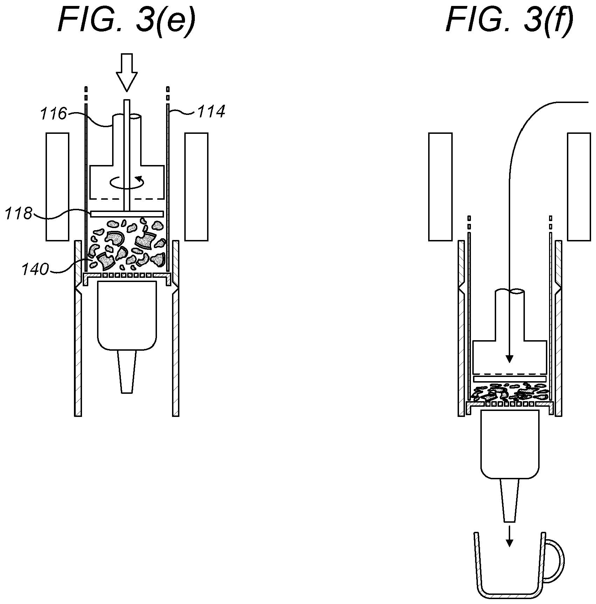

Referring now to Figure 3, the cartridge (100) is loaded into a cartridge tray (not shown) by the user, and the tray then moved into position beneath a roasting chamber (102) (Figure 3(a)).

The collector head (104) in fluid communication with brew spout (113) is then pushed by a ram (not shown) and rises to engage and slide the bottom slidable wall (106) towards the roasting chamber, driving the beans (108) against the folded leaves forming the top wall (110), thereby hinging the sequentially overlapped flaps away from the chamber and so opening the top wall while exposing the beans (108) to the roasting chamber (102) (Figures 3(b) and (c)).

Directional jets of hot air at 200-300°C are then re-circulated through the roasting chamber by a fan (not shown), fluidizing the beans and rapidly roasting them (Figure 3(d)).

After roasting, a stainless steel extraction sleeve (114), within which is disposed, in piston and cylinder configuration, a blade grinder (118) disposed co-axially (and independently reciprocating with) a tamping head (116). The extraction sleeve forms a face pressure seal (140) with the peripheral sealing portion of the slidable wall of the cartridge. The blade grinder then then rotates and reciprocates within the extraction sleeve, so creating turbulence within the extraction sleeve which levitates the beans while the blades fragment them (Figure 3(e)).

Once grinding is complete, the coffee grounds (which are located predominantly on or near the inner walls of the extraction sleeve, having been driven there by centrifugal forces imparted by the spinning blade of the grinder) are redistributed by a jet of pressurized air (not shown) such that they form a substantially even layer on the inner surface of the slidable wall of the cartridge. This produces an extraction bed of coffee grounds of substantially uniform density within the extraction chamber.

Once grinding and bedding is complete, the tamping head (116) pushes the slidable wall (106) together with the (now non-rotating) blade grinder blades and isolated coffee grounds back into the cartridge (100), compressing the grounds against the slidable wall supported by the collector head (Figure 3(f)) and forming a compacted extraction bed of coffee grounds of substantially uniform density and thickness within the extraction chamber.

The collector head comprises a frustoconical portion (not shown) such that a second pressure seal is formed by compression of the peripheral portion of the outer surface of the slidable wall by the sealing rim of the extraction sleeve against the frustum of the collector head.

At this stage, the roasted beans are back within the cartridge chamber (180), but contained within a sealed extraction chamber formed by the inner surface of the extraction sleeve (114) and the central portion of the slidable wall, which comprises a coffee filter paper screen (shown as a broken portion of the slidable wall).

This process yields fresh roasted coffee grounds in the form of a compacted extraction bed of fine coffee particles confined within the chamber of the cartridge, but separated from the side walls (not shown in Figure 3, (12) in Figure 2) by the steel walls of the extraction sleeve (114).

Pressurized hot water is then fed through an infuser (shown as a broken line) in the tamping head (116) from a high pressure pump *via* channels therein (not shown), forcing the hot water through the coffee grounds and extracting a coffee brew which is delivered to the user *via* the brew spout (113) (Figure 3(f), where the arrows show the flow of hot water). Radial leakage of coffee brew is prevented by the second pressure seal between extraction sleeve and the collector head.

The substantially uniform thickness and density of the extraction bed promotes even penetration with the hot water, so facilitating the efficient extraction of the coffee brew.

A reclosing plunger (not shown) then refolds the flaps into the closed position, so that the spent grounds and cartridge can be ejected into a waste compartment (not shown) without user intervention. It should be noted that the hinged flaps need not be refolded into a sequentially overlapping configuration at this stage of the process: all that is required is that the spent coffee grounds be substantially retained by the refolded flaps within the cartridge chamber prior to ejection into the waste compartment. In some embodiments, this step is performed manually by the user so that the spent cartridge and/or spent grounds can be disposed of or recycled immediately.

The foregoing description details presently preferred embodiments of the present invention which are therefore to be considered in all respects as illustrative and not restrictive.

Those skilled in the art will recognize, or be able to ascertain, using no more than routine experimentation, many equivalents, modifications and variations to the specific embodiments of the invention described specifically herein. The scope of the invention is defined in the following claims.

## Claims

1. A system for roasting, grinding, brewing and dispensing coffee comprising:
(a) a coffee cartridge (10) containing: (i) unground and (ii) unroasted or part-roasted coffee beans, said cartridge having walls defining a cartridge chamber (18) in which the beans are confined, wherein part or all of at least one wall (16) of the cartridge is openable, and the openable wall (16) of the cartridge is opposed to a slidable wall (14) thereof, said slidable wall (14) comprising:
i. inner and outer surfaces, the inner surface being in contact with the beans;
ii. a peripheral sealing portion (24) on the inner surface; and
iii. a central portion bounded by the peripheral sealing portion (24) and comprising a screen (28) for retaining the beans within the cartridge chamber while permitting a flow of coffee brew therethrough;
wherein said cartridge is secured in a cartridge holder of:
(b) coffee-making apparatus comprising:
i. a collector head (104) adapted to contact and support the outer surface of the slidable wall (14) of the cartridge (10) and to collect coffee brew flowing therethrough;
ii. means for bringing the collector head (104) into contact with the outer surface of the slidable wall (14) and for sliding said slidable wall (14) towards the openable wall (16) of the cartridge, thereby opening the wall to produce an opened wall and exposed beans;
iii. means for roasting the exposed beans;
iv. an extraction sleeve (114) having inner and outer surfaces and a sealing rim, the extraction sleeve (114) being adapted to enter the cartridge chamber *via* the opened wall such that the sealing rim forms a face pressure seal with the peripheral sealing portion (24) of the slidable wall (14) of the cartridge, which seal isolates the exposed beans from the rest of the cartridge and contains them within an extraction chamber formed by the inner surface of the extraction sleeve and the central portion of the slidable wall (14);
v. a blade grinder (118) adapted to rotate within the extraction sleeve (114), thereby levitating the beans off the inner surface of the slidable wall (14) and fragmenting them to form coffee grounds within the extraction chamber;
vi. bedding means for distributing the coffee grounds such that they are disposed substantially evenly on the inner surface of the slidable wall (14) of the cartridge (10) thereby forming an extraction bed within the extraction chamber;
vii. a source of hot water, optionally pressurized hot water;
viii. an infuser head in fluid communication with the source of hot water and comprising infuser means comprising one or more outlets for the hot water, the infuser head being adapted to deliver hot water to the extraction bed within the extraction chamber, whereby coffee is extracted to yield a coffee brew; and
ix. means for delivering said coffee brew to a drinking vessel for consumption.

2. The system of claim 1 wherein the grinder is: (a) adapted to reciprocate within the extraction sleeve; and/or (b) adapted to rotate bi-directionally within the extraction sleeve; and/or (c) is retractable; and/or (d) is a high-speed blade grinder.

3. The system of any one of the preceding claims wherein said bedding means comprises:
(a) a source of pressurized air and means for directing a jet of pressurized air at the coffee grounds within the extraction chamber; and/or (b) a source of water for suspending the coffee grounds within the extraction chamber.

4. The system of any one of the preceding claims wherein said bedding means comprises means for generating a turbulent flow of air within the extraction chamber.

5. The system of claim 4 wherein said means for generating a turbulent flow of air within the extraction chamber comprises the blade grinder.

6. The system of any one of the preceding claims further comprising a tamping head adapted to tamp the extraction bed to form a compacted extraction bed within the extraction chamber, optionally wherein said tamping head is comprised in said infuser head and is in fluid communication with the source of hot water.

7. The system of any one of the preceding claims wherein the beans are excluded from the peripheral sealing portion of the slidable wall of the cartridge by a fence disposed on the inner surface of the slidable wall.

8. The system of claim 7, wherein said fence facilitates the formation of the face pressure seal between the sealing rim of the extraction sleeve and the peripheral sealing portion of the slidable wall of the cartridge by maintaining a bean-free peripheral sealing portion on the inner surface of the slidable wall of the cartridge.

9. The system of claim 7 or claim 8, wherein said fence is a displaceable fence, adapted to be displaced radially by the extraction sleeve when forming the face pressure seal with the peripheral sealing portion of the slidable wall of the cartridge.

10. The system of claim 9, wherein the displaceable fence comprises an inner surface in contact with the beans and an outer surface facing the walls of the cartridge chamber, the fence being adapted such that entry of the extraction sleeve into the cartridge chamber brings the outer surface of the extraction sleeve into contact with the inner surface of the fence and exerts an outward radial force thereon, thereby displacing it to a location outside of the extraction chamber after formation of said face pressure seal, for example wherein the displaceable fence is in the form of a circular band having a substantially frustoconical upper portion, the lower edge being in contact with the peripheral portion of the inner surface of the slidable wall and the upper edge having a diameter greater than that of the lower edge.

11. The system of any one of the preceding claims wherein the means for roasting the exposed beans comprises:
(a) a source of a stream of air for levitating the exposed beans; and/or
(b) heating means selected from: means for microwave heating, radiant heating, conductive heating, convection heating or any combination thereof; and/or
(c) a roasting chamber for fluidized bed roasting of the coffee beans.

12. The system of any one of the preceding claims wherein the hot water is pressurized and the extraction sleeve is adapted to serve as a pressure jacket to contain the pressurized hot water during delivery to the coffee grounds.

13. The system of any one of the preceding claims wherein the means for bringing the collector head into contact with the outer surface of the slidable wall and for sliding said slidable wall towards the openable wall of the cartridge is adapted to drive the slidable wall of the cartridge towards the openable wall thereof thereby exerting a force of the openable wall such that it opens, so exposing the beans and/or displacing the beans from the cartridge chamber.

14. The system of any one of the preceding claims wherein the coffee beans are selected from:
(a) whole and/or cracked coffee beans;
(b) unroasted coffee beans, for example selected from: (i) green coffee beans; (ii) dried coffee beans; (iii) pre-heated coffee beans; and (iv) mixtures of two or more of the foregoing;
(c) part-roasted coffee beans; and
(e) mixtures of the foregoing.

15. A process for producing and dispensing brewed coffee comprising automated, sequential steps of roasting, grinding, bedding and extracting: (i) unground and (ii) unroasted or part-roasted coffee beans, the process comprising the steps of:
(a) providing a coffee cartridge containing: (i) unground and (ii) unroasted or part-roasted coffee beans, said cartridge having walls defining a cartridge chamber in which the beans are confined, wherein part or all of at least one wall of the cartridge is openable, and the openable wall of the cartridge is opposed to a slidable wall thereof, said slidable wall comprising:
i. inner and outer surfaces, the inner surface being in contact with the beans;
ii. a peripheral sealing portion on the inner surface; and
iii. a central portion bounded by the peripheral sealing portion and comprising a screen for retaining the beans within the cartridge chamber while permitting a flow of coffee brew therethrough;
(b) securing the cartridge in a cartridge holder of coffee-making apparatus comprising:
i. a collector head adapted to contact and support the outer surface of the slidable wall of the cartridge and to collect coffee brew flowing therethrough;
ii. means for bringing the collector head into contact with the outer surface of the slidable wall and for sliding said slidable wall towards the openable wall of the cartridge, thereby opening the wall to produce an opened wall and exposed beans;
iii. means for roasting the exposed beans;
iv. an extraction sleeve having inner and outer surfaces and a sealing rim, the extraction sleeve being adapted to enter the cartridge chamber *via* the opened wall such that the sealing rim forms a face pressure seal with the peripheral sealing portion of the slidable wall of the cartridge, which seal isolates the exposed beans from the rest of the cartridge and contains them within an extraction chamber formed by the inner surface of the extraction sleeve and the central portion of the slidable wall;
v. a blade grinder adapted to rotate within the extraction sleeve, thereby levitating the beans off the inner surface of the slidable wall and fragmenting them to form coffee grounds within the extraction chamber;
vi. bedding means for distributing the coffee grounds such that they are disposed substantially evenly on the inner surface of the slidable wall of the cartridge thereby forming an extraction bed within the extraction chamber;
vii. a source of hot water, optionally pressurized hot water;
viii. an infuser head in fluid communication with the source of hot water and comprising infuser means comprising one or more outlets for the hot water, the infuser head being adapted to deliver hot water to the extraction bed within the extraction chamber, whereby coffee is extracted to yield a coffee brew; and
ix. means for delivering said coffee brew to a drinking vessel for consumption;
(c) roasting the beans; and then
(d) grinding, bedding and extracting the roasted beans within the extraction chamber.

## Patentansprüche

1. System zum Rösten, Mahlen, Brühen und Ausgeben von Kaffee, das Folgendes umfasst:
(a) eine Kaffeepatrone (10), die Folgendes beinhaltet: (i) ungemahlene und (ii) ungeröstete oder teilgeröstete Kaffeebohnen, wobei die Patrone Wände aufweist, die eine Patronenkammer (18) definieren, in der die Bohnen eingeschlossen sind, wobei ein Teil oder alle wenigstens einer Wand (16) der Patrone sich öffnen lässt/lassen und die sich öffnen lassende Wand (16) der Patrone einer verschiebbaren Wand (14) davon gegenüberliegt, wobei die verschiebbare Wand (14) Folgendes umfasst:
i. eine innere und eine äußere Oberfläche, wobei die innere Oberfläche in Berührung mit den Bohnen ist;
ii. einen peripheren Dichtungsabschnitt (24) auf der inneren Oberfläche; und
iii. einen mittleren Abschnitt, der durch den peripheren Dichtungsabschnitt (24) begrenzt ist und ein Sieb (28) zum Zurückhalten der Bohnen innerhalb der Patronenkammer umfasst, während es einen Strom von Kaffeebrühe dahindurch zulässt;
wobei die Patrone in einem Patronenhalter von Folgendem befestigt ist:
(b) Kaffeezubereitungseinrichtung, die Folgendes umfasst:
i. einen Auffangkopf (104), der angepasst ist, um die äußere Oberfläche der verschiebbaren Wand (14) der Patrone (10) zu berühren und zu stützen und um Kaffeebrühe aufzufangen, die dahindurch strömt;
ii. ein Mittel zum Inberührungbringen des Auffangkopfs (104) mit der äußeren Oberfläche der verschiebbaren Wand (14) und zum Verschieben der verschiebbaren Wand (14) in Richtung der sich öffnen lassenden Wand (16) der Patrone, wobei dadurch die Wand geöffnet wird, um eine geöffnete Wand und freigelegte Bohnen zu produzieren;
iii. ein Mittel zum Rösten der freigelegten Bohnen;
iv. eine Extraktionshülse (114), die die innere und die äußere Oberfläche und einen Dichtungsrand aufweist, wobei die Extraktionshülse (114) angepasst ist, um *über* die geöffnete Wand in die Patronenkammer derart einzutreten, dass der Dichtungsrand eine Flächendruckdichtung mit dem peripheren Dichtungsabschnitt (24) der verschiebbaren Wand (14) der Patrone ausbildet, deren Dichtung die freigelegten Bohnen von dem Rest der Patrone isoliert und sie innerhalb einer Extraktionskammer beinhaltet, die durch die innere Oberfläche der Extraktionshülse und den mittleren Abschnitt der verschiebbaren Wand (14) ausgebildet wird;
v. eine Propellermühle (118), die angepasst ist, um innerhalb der Extraktionshülse (114) zu rotieren, wobei dadurch die Bohnen von der inneren Oberfläche der verschiebbaren Wand (14) weg levitiert und zerstückelt werden, um einen Kaffeesatz innerhalb der Extraktionskammer auszubilden;
vi. ein Bettungsmittel zum Verteilen des Kaffeesatzes derart, dass es im Wesentlichen gleichmäßig auf der inneren Oberfläche der verschiebbaren Wand (14) der Patrone (10) angeordnet ist, wobei dadurch ein Extraktionsbett innerhalb der Extraktionskammer ausgebildet wird;
vii. eine Heißwasserquelle, optional unter Druck stehendes heißes Wasser;
viii. einen Aufgusskopf, der in Fluidverbindung mit der Heißwasserquelle steht und ein Aufgussmittel umfasst, das einen oder mehrere Auslässe für das heiße Wasser umfasst, wobei der Aufgusskopf angepasst ist, um heißes Wasser an das Extraktionsbett innerhalb der Extraktionskammer zuzuführen, wodurch Kaffee extrahiert wird, um eine Kaffeebrühe zu erhalten; und
ix. ein Mittel zum Zuführen der Kaffeebrühe zu einem Trinkgefäß für einen Verzehr.

2. System nach Anspruch 1, wobei die Mühle Folgendes ist: (a) angepasst, um sich innerhalb der Extraktionshülse hin- und herzubewegen; und/oder (b) angepasst, um innerhalb der Extraktionshülse bidirektional zu rotieren; und/oder (c) einziehbar; und/oder (d) eine Hochgeschwindigkeitspropellermühle.

3. System nach einem der vorhergehenden Ansprüche, wobei das Bettungsmittel Folgendes umfasst: (a) eine Druckluftquelle und ein Mittel zum Richten eines Druckluftstrahls auf den Kaffeesatz innerhalb der Extraktionskammer; und/oder (b) eine Wasserquelle zum Suspendieren des Kaffeesatzes innerhalb der Extraktionskammer.

4. System nach einem der vorhergehenden Ansprüche, wobei das Bettungsmittel ein Mittel zum Erzeugen einer turbulenten Luftströmung innerhalb der Extraktionskammer umfasst.

5. System nach Anspruch 4, wobei das Mittel zum Erzeugen einer turbulenten Luftströmung innerhalb der Extraktionskammer die Propellermühle umfasst.

6. System nach einem der vorhergehenden Ansprüche, das ferner einen Tamperkopf umfasst, der zum Tampen des Extraktionsbetts angepasst ist, um ein verdichtetes Extraktionsbett innerhalb der Extraktionskammer auszubilden, optional wobei der Tamperkopf in dem Aufgusskopf enthalten ist und in Fluidverbindung mit der Heißwasserquelle steht.

7. System nach einem der vorhergehenden Ansprüche, wobei die Bohnen von dem peripheren Dichtungsabschnitt der verschiebbaren Wand der Patrone durch einen Zaun ausgeschlossen sind, der an der inneren Oberfläche der verschiebbaren Wand angeordnet ist.

8. System nach Anspruch 7, wobei der Zaun die Ausbildung der Flächendruckdichtung zwischen dem Dichtungsrand der Extraktionshülse und dem peripheren Dichtungsabschnitt der verschiebbaren Wand der Patrone durch Aufrechterhalten eines bohnenfreien peripheren Dichtungsabschnitts auf der inneren Oberfläche der verschiebbaren Wand der Patrone erleichtert.

9. System nach Anspruch 7 oder 8, wobei der Zaun ein verstellbarer Zaun ist, der angepasst ist, um durch die Extraktionshülse radial verstellt zu werden, wenn die Flächendruckdichtung mit dem peripheren Dichtungsabschnitt der verschiebbaren Wand der Patrone ausgebildet wird.

10. System nach Anspruch 9, wobei der verstellbare Zaun eine innere Oberfläche, die mit den Bohnen in Berührung steht, und eine äußere Oberfläche umfasst, die den Wänden der Patronenkammer zugewandt ist, wobei der Zaun derart angepasst ist, dass der Eintritt der Extraktionshülse in die Patronenkammer die äußere Oberfläche der Extraktionshülse in Berührung mit der inneren Oberfläche des Zauns bringt und eine nach außen gerichtete radiale Kraft darauf ausübt, wobei dadurch er zu einer Stelle außerhalb der Extraktionskammer nach der Ausbildung der Flächendruckdichtung verstellt wird, zum Beispiel wobei der verstellbare Zaun in Form eines kreisförmigen Bands vorliegt, das einem im Wesentlichen kegelstumpfförmigen oberen Abschnitt aufweist, wobei die untere Kante in Berührung mit dem peripheren Abschnitt der inneren Oberfläche der verschiebbaren Wand ist und die obere Kante einen größeren Durchmesser als die untere Kante aufweist.

11. System nach einem der vorhergehenden Ansprüche, wobei das Mittel zum Rösten der freigelegten Bohnen Folgendes umfasst:
(a) eine Luftstromquelle zum Levitieren der freigelegten Bohnen; und/oder
(b) ein Heizmittel, das aus Folgendem ausgewählt sind: ein Mittel zum Mikrowellenheizen, Strahlungsheizen, Konduktionsheizen, Konvektionsheizen oder einer beliebigen Kombination davon; und/oder
(c) eine Röstkammer zum Wirbelbettrösten der Kaffeebohnen.

12. System nach einem der vorhergehenden Ansprüche, wobei das heiße Wasser unter Druck gesetzt wird und die Extraktionshülse angepasst ist, um als ein Druckmantel zu dienen, um das unter Druck stehende heiße Wasser während einer Zufuhr zu dem Kaffeesatz zu beinhalten.

13. System nach einem der vorhergehenden Ansprüche, wobei das Mittel zum Inberührungbringen des Auffangkopfs mit der äußeren Oberfläche der verschiebbaren Wand und zum Verschieben der verschiebbaren Wand in Richtung der sich öffnen lassenden Wand der Patrone angepasst ist, um die verschiebbare Wand der Patrone in Richtung der sich öffnen lassenden Wand davon anzutreiben, wobei dadurch eine Kraft der sich öffnen lassenden Wand derart ausgeübt wird, dass sie sich öffnet, wodurch die Bohnen freigelegt und/oder die Bohnen aus der Patronenkammer verstellt werden.

14. System nach einem der vorhergehenden Ansprüche, wobei die Kaffeebohnen aus Folgendem ausgewählt sind:
(a) ganzen und/oder gebrochenen Kaffeebohnen;
(b) ungerösteten Kaffeebohnen, die zum Beispiel aus Folgendem ausgewählt sind: (i) grünen Kaffeebohnen; (ii) getrockneten Kaffeebohnen; (iii) vorerhitzten Kaffeebohnen; und (iv) Mischungen von zwei oder mehr der Vorangehenden;
(c) teilgerösteten Kaffeebohnen; und
(e) Mischungen der Vorangehenden.

15. Vorgang zum Herstellen und Ausgeben von gebrühtem Kaffee, der automatisierte, aufeinanderfolgende Schritte des Röstens, Mahlens, Bettens und Extrahierens von Folgendem umfasst: (i) ungemahlenen und (ii) ungerösteten oder teilgerösteten Kaffeebohnen, wobei der Vorgang die folgenden Schritte umfasst:
(a) Bereitstellen einer Kaffeepatrone, die Folgendes beinhaltet: (i) ungemahlene und (ii) ungeröstete oder teilgeröstete Kaffeebohnen, wobei die Patrone Wände aufweist, die eine Patronenkammer definieren, in der die Bohnen eingeschlossen sind, wobei der Teil oder alle wenigstens einer Wand der Patrone sich öffnen lässt/lassen, und die sich öffnen lassende Wand der Patrone einer verschiebbaren Wand davon gegenüberliegt, wobei die verschiebbare Wand Folgendes umfasst:
i. die innere und die äußere Oberfläche, wobei die innere Oberfläche in Berührung mit den Bohnen ist;
ii. einen peripheren Dichtungsabschnitt auf der inneren Oberfläche; und
iii. einen mittleren Abschnitt, der durch den peripheren Dichtungsabschnitt begrenzt ist und ein Sieb zum Zurückhalten der Bohnen innerhalb der Patronenkammer umfasst, während es einen Strom von Kaffeebrühe dahindurch zulässt;
(b) Befestigen der Patrone in einem Patronenhalter der Kaffeezubereitungseinrichtung, die Folgendes umfasst:
i. einen Auffangkopf, der angepasst ist, um die äußere Oberfläche der verschiebbaren Wand der Patrone zu berühren und zu stützen und um Kaffeebrühe aufzufangen, die dahindurch strömt;
ii. das Mittel zum Inberührungbringen des Auffangkopfs mit der äußeren Oberfläche der verschiebbaren Wand und zum Verschieben der verschiebbaren Wand in Richtung der sich öffnen lassenden Wand der Patrone, wobei dadurch die Wand geöffnet wird, um eine geöffnete Wand und freigelegte Bohnen zu produzieren;
iii. das Mittel zum Rösten der freigelegten Bohnen;
iv. eine Extraktionshülse, die die innere und die äußere Oberfläche und einen Dichtungsrand aufweist, wobei die Extraktionshülse angepasst ist, um *über* die geöffnete Wand in die Patronenkammer derart einzutreten, dass der Dichtungsrand eine Flächendruckdichtung mit dem peripheren Dichtungsabschnitt der verschiebbaren Wand der Patrone ausbildet, deren Dichtung die freigelegten Bohnen von dem Rest der Patrone isoliert und sie innerhalb einer Extraktionskammer beinhaltet, die durch die innere Oberfläche der Extraktionshülse und den mittleren Abschnitt der verschiebbaren Wand ausgebildet wird;
v. eine Propellermühle, die angepasst ist, um innerhalb der Extraktionshülse zu rotieren, wobei dadurch die Bohnen von der inneren Oberfläche der verschiebbaren Wand weg levitiert und zerstückelt werden, um den Kaffeesatz innerhalb der Extraktionskammer auszubilden;
vi. das Bettungsmittel zum Verteilen des Kaffeesatzes derart, dass er im Wesentlichen gleichmäßig auf der inneren Oberfläche der verschiebbaren Wand der Patrone angeordnet ist, wobei dadurch ein Extraktionsbett innerhalb der Extraktionskammer ausgebildet wird;
vii. eine Heißwasserquelle, optional unter Druck stehendes heißes Wasser;
viii. einen Aufgusskopf, der in Fluidverbindung mit der Heißwasserquelle steht und das Aufgussmittel umfasst, die einen oder mehrere Auslässe für das heiße Wasser umfassen, wobei der Aufgusskopf angepasst ist, um heißes Wasser an das Extraktionsbett innerhalb der Extraktionskammer zuzuführen, wodurch Kaffee extrahiert wird, um eine Kaffeebrühe zu erhalten; und
ix. das Mittel zum Zuführen der Kaffeebrühe zu einem Trinkgefäß für den Verzehr;
(c) Rösten der Bohnen; und dann
(d) Mahlen, Betten und Extrahieren der gerösteten Bohnen innerhalb der Extraktionskammer.

## Revendications

1. Système pour torréfier, moudre, infuser et distribuer du café comprenant :
(a) une cartouche de café (10) contenant : (i) des grains de café non moulus et (ii) non torréfiés ou partiellement torréfiés, ladite cartouche ayant des parois définissant une chambre de cartouche (18) dans laquelle les grains sont confinés, une partie ou la totalité d'au moins une paroi (16) de la cartouche peut être ouverte, et la paroi pouvant être ouverte (16) de la cartouche est opposée à une paroi coulissante (14) de celle-ci, ladite paroi coulissante (14) comprenant :
i. des surfaces interne et externe, la surface interne étant en contact avec les grains ;
ii. une partie d'étanchéité périphérique (24) sur la surface interne ; et
iii. une partie centrale délimitée par la partie d'étanchéité périphérique (24) et comprenant un tamis (28) pour retenir les grains à l'intérieur de la chambre de cartouche tout en permettant un écoulement de l'infusion de café à travers celle-ci ;
dans lequel ladite cartouche est fixée dans un support de cartouche de :
(b) une machine à café comprenant :
i. une tête collectrice (104) adaptée pour entrer en contact avec et supporter la surface externe de la paroi coulissante (14) de la cartouche (10) et pour collecter l'infusion de café s'écoulant à travers celle-ci ;
ii. des moyens pour amener la tête collectrice (104) en contact avec la surface externe de la paroi coulissante (14) et pour faire coulisser ladite paroi coulissante (14) vers la paroi pouvant être ouverte (16) de la cartouche, ouvrant ainsi la paroi pour produire une paroi ouverte et des grains exposés ;
iii. des moyens pour torréfier les grains exposés ;
iv. un manchon d'extraction (114) ayant des surfaces interne et externe et un rebord d'étanchéité, le manchon d'extraction (114) étant adapté pour entrer dans la chambre de cartouche *par l'intermédiaire de* la paroi ouverte de telle sorte que le rebord d'étanchéité forme un joint de pression de face avec la partie d'étanchéité périphérique (24) de la paroi coulissante (14) de la cartouche, lequel joint isole les grains exposés du reste de la cartouche et les contient à l'intérieur d'une chambre d'extraction formée par la surface interne du manchon d'extraction et la partie centrale de la paroi coulissante (14) ;
v. un moulin à café à couteau (118) adapté pour tourner dans le manchon d'extraction (114), faisant ainsi léviter les grains de la surface interne de la paroi coulissante (14) et les fragmentant pour former du marc de café dans la chambre d'extraction ;
vi. des moyens de mise en lit pour répartir le marc de café de telle sorte qu'ils sont disposés sensiblement uniformément sur la surface interne de la paroi coulissante (14) de la cartouche (10) formant ainsi un lit d'extraction à l'intérieur de la chambre d'extraction ;
vii. une source d'eau chaude, éventuellement d'eau chaude sous pression ;
viii. une tête d'infusion en communication fluidique avec la source d'eau chaude et comprenant des moyens d'infusion comprenant une ou plusieurs sorties pour l'eau chaude, la tête d'infusion étant adaptée pour fournir de l'eau chaude au lit d'extraction à l'intérieur de la chambre d'extraction, moyennant quoi le café est extrait pour donner une infusion de café ; et
ix. des moyens pour délivrer ladite infusion de café à un récipient à boire pour consommation.

2. Système selon la revendication 1, dans lequel le moulin est : (a) adapté pour effectuer un mouvement de va-et-vient à l'intérieur du manchon d'extraction ; et/ou (b) adapté pour tourner dans les deux sens à l'intérieur du manchon d'extraction ; et/ou (c) est rétractable ; et/ou (d) est un moulin à café à couteau à grande vitesse.

3. Système selon l'une quelconque des revendications précédentes, dans lequel lesdits moyens de mise en lit comprennent : (a) une source d'air sous pression et des moyens pour diriger un jet d'air sous pression au marc de café à l'intérieur de la chambre d'extraction ; et/ou (b) une source d'eau pour mettre en suspension le marc de café dans la chambre d'extraction.

4. Système selon l'une quelconque des revendications précédentes, dans lequel lesdits moyens de mise en lit comprennent des moyens pour générer un écoulement d'air turbulent à l'intérieur de la chambre d'extraction.

5. Système selon la revendication 4, dans lequel lesdits moyens pour générer un écoulement d'air turbulent à l'intérieur de la chambre d'extraction comprennent le moulin à café à couteau.

6. Système selon l'une quelconque des revendications précédentes, comprenant en outre une tête de tassage adaptée pour tasser le lit d'extraction pour former un lit d'extraction compacté à l'intérieur de la chambre d'extraction, éventuellement dans lequel ladite tête de tassage est comprise dans ladite tête d'infusion et est en communication fluidique avec la source d'eau chaude.

7. Système selon l'une quelconque des revendications précédentes, dans lequel les grains sont exclus de la partie d'étanchéité périphérique de la paroi coulissante de la cartouche par une clôture disposée sur la surface intérieure de la paroi coulissante.

8. Système selon la revendication 7, dans lequel ladite clôture facilite la formation du joint de pression de face entre le rebord d'étanchéité du manchon d'extraction et la partie d'étanchéité périphérique de la paroi coulissante de la cartouche en maintenant une partie d'étanchéité périphérique sans grain sur la surface interne de la paroi coulissante de la cartouche.

9. Système selon la revendication 7 ou la revendication 8, dans lequel ladite clôture est une clôture déplaçable, adaptée pour être déplacée de manière radiale par le manchon d'extraction lors de la formation du joint de pression de face avec la partie d'étanchéité périphérique de la paroi coulissante de la cartouche.

10. Système selon la revendication 9, dans lequel la clôture déplaçable comprend une surface interne en contact avec les grains et une surface externe faisant face aux parois de la chambre de cartouche, la clôture étant adaptée de telle sorte que l'entrée du manchon d'extraction dans la chambre de cartouche amène la surface externe du manchon d'extraction en contact avec la surface interne de la clôture et exerce une force radiale vers l'extérieur sur celle-ci, la déplaçant ainsi vers un emplacement à l'extérieur de la chambre d'extraction après la formation dudit joint de pression de face, par exemple dans lequel la clôture déplaçable se présente sous la forme d'une bande circulaire ayant une partie supérieure sensiblement tronconique, le bord inférieur étant en contact avec la partie périphérique de la surface interne de la paroi coulissante et le bord supérieur ayant un diamètre supérieur à celui du bord inférieur.

11. Système selon l'une quelconque des revendications précédentes, dans lequel les moyens pour torréfier les grains exposés comprennent :
(a) une source d'un courant d'air pour faire léviter les grains exposés ; et/ou
(b) des moyens de chauffage choisis parmi : des moyens de chauffage par microondes, de chauffage par rayonnement, de chauffage par conduction, de chauffage par convection ou toute combinaison de ceux-ci ; et/ou
(c) une chambre de torréfaction pour torréfier en lit fluidisé les grains de café.

12. Système selon l'une quelconque des revendications précédentes, dans lequel l'eau chaude est sous pression et le manchon d'extraction est adapté pour servir de chemise de pression pour contenir l'eau chaude sous pression pendant la distribution au marc de café.

13. Système selon l'une quelconque des revendications précédentes, dans lequel les moyens pour amener la tête collectrice en contact avec la surface externe de la paroi coulissante et pour faire coulisser ladite paroi coulissante vers la paroi pouvant être ouverte de la cartouche sont adaptés pour entraîner la paroi coulissante de la cartouche vers la paroi pouvant être ouverte de celle-ci, exerçant ainsi une force de la paroi pouvant être ouverte de telle sorte qu'elle s'ouvre, exposant ainsi les grains et/ou déplaçant les grains à partir de la chambre de cartouche.

14. Système selon l'une quelconque des revendications précédentes, dans lequel les grains de café sont choisis parmi :
(a) des grains de café entiers et/ou concassés ;
(b) des grains de café non torréfiés, par exemple choisis parmi : (i) des grains de café vert ; (ii) grains de café séchés ; (iii) grains de café préchauffés ; et (iv) des mélanges de deux ou plusieurs des précédents ;
(c) des grains de café pré-torréfiés ; et
(e) des mélanges des précédents.

15. Procédé de production et de distribution de café infusé comprenant des étapes séquentielles automatisées consistant à torréfier, moudre, mettre en lit et extraire : (i) des grains de café non moulus et (ii) non torréfiés ou partiellement torréfiés, le procédé comprenant les étapes consistant à :
(a) fournir une cartouche de café contenant : (i) des grains de café non moulus et (ii) non torréfiés ou partiellement torréfiés, ladite cartouche ayant des parois définissant une chambre de cartouche dans laquelle les grains sont confinés, une partie ou la totalité d'au moins une paroi de la cartouche pouvant être ouverte, et la paroi pouvant être ouverte de la cartouche étant opposée à une paroi coulissante de celle-ci, ladite paroi coulissante comprenant :
i. des surfaces interne et externe, la surface interne étant en contact avec les grains ;
ii. une partie d'étanchéité périphérique sur la surface interne ; et
iii. une partie centrale délimitée par la partie d'étanchéité périphérique et comprenant un tamis pour retenir les grains à l'intérieur de la chambre de cartouche tout en permettant un écoulement d'infusion de café à travers celle-ci ;
(b) fixer la cartouche dans un support de cartouche d'une machine à café comprenant :
i. une tête collectrice adaptée pour entrer en contact avec et supporter la surface externe de la paroi coulissante de la cartouche et pour collecter l'infusion de café s'écoulant à travers celle-ci ;
ii. des moyens pour amener la tête collectrice en contact avec la surface externe de la paroi coulissante et pour faire coulisser ladite paroi coulissante vers la paroi pouvant être ouverte de la cartouche, ouvrant ainsi la paroi pour produire une paroi ouverte et des grains exposés ;
iii. des moyens pour torréfier les grains exposés ;
iv. un manchon d'extraction ayant des surfaces interne et externe et un rebord d'étanchéité, le manchon d'extraction étant adapté pour entrer dans la chambre de cartouche *par l'intermédiaire de* la paroi ouverte de telle sorte que le rebord d'étanchéité forme un joint de pression de face avec la partie d'étanchéité périphérique de la paroi coulissante de la cartouche, lequel joint isole les grains exposés du reste de la cartouche et les contient à l'intérieur d'une chambre d'extraction formée par la surface interne du manchon d'extraction et la partie centrale de la paroi coulissante ;
v. un moulin à café à couteau adapté pour tourner à l'intérieur du manchon d'extraction, faisant ainsi léviter les grains de la surface intérieure de la paroi coulissante et les fragmentant pour former du marc de café à l'intérieur de la chambre d'extraction ;
vi. des moyens de mise en lit pour répartir le marc de café de telle sorte qu'il est disposé sensiblement uniformément sur la surface interne de la paroi coulissante de la cartouche, formant ainsi un lit d'extraction à l'intérieur de la chambre d'extraction ;
vii. une source d'eau chaude, éventuellement d'eau chaude sous pression ;
viii. une tête d'infusion en communication fluidique avec la source d'eau chaude et comprenant des moyens d'infusion comprenant une ou plusieurs sorties pour l'eau chaude, la tête d'infusion étant adaptée pour fournir de l'eau chaude au lit d'extraction à l'intérieur de la chambre d'extraction, moyennant quoi le café est extrait pour donner une infusion de café ; et
ix. des moyens pour délivrer ladite infusion de café à un récipient à boire pour consommation ;
(c) torréfier les grains ; et ensuite
(d) moudre, mettre en lit et extraire les grains torréfiées dans la chambre d'extraction.
